# EUROPEAN PATENT APPLICATION

(11) **EP 1 669 918 A2**
(43) Date of publication of application: **14.06.2006**
(21) Application number: 05103196.1
(22) Date of filing: 20.04.2005
(51) Int. Cl.: G06Q 10/00

(54) **Rubricone performance assessment system**

(30) Priority: 17.03.2005 US 82613; 20.04.2004 US 563792 P
(71) Applicant: Zeech Incorporated, Frankfort, IL 60423 (US)
(72) Inventor: Chiszar, Micheal, IL 60448, Mokena (US); Guitierrez, Jeffrey, IL 60103, Bartlett (US)
(74) Representative: Henkel, Feiler & Hänzel

(57) **Abstract**

A data collection and scoring system for performance assessments wherein the system has the facility for creating, editing, and scoring various rubrics and checklists, for maintaining a library of rubrics and checklists to download and use or edit, for utilizing either a PC or a mobile handheld computer to create, edit, or score the assessments, for uploading and downloading data between the PC and the handheld computer, and for creating customizable, objective scoring systems for subjective assessments. The system may be used for any performance or observable assessment including but not limited to, writing exams, listening exams, speaking exams, judging contests, driver's exams, physical education skills, music skills, votech course skills, employee reviews, and/or any type of inspection whether it's inspecting a person, a building, a mechanism, a component, a process, or anything that can potentially be inspected.

## Description

### CROSS-REFERENCE TO RELATED APPLICATIONS

This application claims the benefit of U.S. Provisional Application Ser. No. 60/563,792, filed April 20, 2004, which is incorporated by reference as if fully set forth herein.

### FIELD OF INVENTION

The present invention is generally directed to a system and method for, in one exemplary embodiment, allowing educators and others to assess student and/or employee performance. More particularly, the present invention allows, for example, the creation, delivery and automatic grading of performance assessments, which provides immediate feedback to users.

### BACKGROUND OF THE INVENTION

Educators, government employees, and employers are constantly attempting to assess performance. This is particularly important for determining students' progress and for determining how to help improve performance.

A rubric is a grid of objectives to be assessed and defined levels of accomplishment. While a rubric provides defined levels of achievement, many applications only require a checklist. A checklist is a specific item to be assessed. Often, it requires a pass/fail grade. For example, if a user needs to inspect a device or a house's roof, it typically requires a simple pass/fail rating. Sometimes, users have applications that require not only a pass/fail, but also a Score.

Rubrics and checklists have long been used to grade performance assessments. Unfortunately, the information and methods of collecting the information by traditional rubrics/checklists is limited and time consuming. Furthermore, the information provided is very limited and does not allow raters to use the results in very helpful formats. The results may not provide enough detailed information with regard to aggregating information for group reporting or judging an event. The information may not be output in an immediate, timely manner as well.

Accordingly, there is a need for a performance assessment system utilizing rubrics and checklists that allows educators and employers immediate feedback, the ability to create and edit these tools at any time, anywhere, the ability to score and store the data in a remote location and to upload to a computer software at a later time, and the ability to aggregate the data from multiple scorers.

Educators, employers, researchers, and other users are constantly attempting to assess either people's abilities or their thoughts or feelings and attain immediate feedback. This is particularly important to determine a path to take based upon instant results. In education, it is particularly important to understand how and what students learned or like before moving forward in a curriculum.

Polling has been used to provide immediate feedback. Unfortunately, the methods to utilize polling may be limited to a single function device or a proprietary device or even manually. Furthermore, the information provided is a very limited and the ability for users to customize and create new uses may be limited. Additionally, it may be also be limited by the fact that it only provides a single choice response.

Accordingly, there is a need for a polling system that allows users to use a multifunctional handheld computing device that is not proprietary in nature. There is a need to have more flexibility, creativity, and the ability to generate new uses without requiring additional software programming or components. There is also a need to immediately aggregate and score with a customizable scoring method and to allow for open ended responses.

### BRIEF DESCRIPTION OF THE DRAWINGS

The benefits and advantages of the present invention will become more readily apparent to those of ordinary skill in the relevant art after reviewing the following detailed description and accompanying drawings, wherein:

Figure 1A shows the RubricOne handheld application communicating with the RubricOne server through a piece of software running on a PC;

Figure 1B shows multiple handheld devices with the RubricOne application communicating directly to the RubricOne server;

Figure 2 is a flowchart illustrating the logical flow of data when synchronizing between the RubricOne handheld application and the RubricOne Server on wired and wireless networks;

Figure 3 is a flowchart illustrating the overall process of managing records on the RubricOne handheld application;

Figure 4 is a flowchart illustrating the process of creating and updating of grading sheets on the RubricOne handheld application;

Figure 4A is a snapshot of the rubric grading sheet creation screen;

Figure 4B is a snapshot of the rubric grading sheet screen. Also shown is the upload flag that when checked indicates that the grading sheet should be uploaded or synchronized on the next synchronization action;

Figure 4C is a snapshot of the student grading sheet screen, including the objective name, available levels per objective, objective score, and comment;

Figure 4D is a snapshot of the comment dialog box. A user may type-in a student performance notes for the objective in which a user may select a pre-created comment;

Figure 4E is a snapshot of the "objective-performance level" information;

Figure 4F is a snapshot of the objective information;

Figure 4G is a snapshot of the class statistical information screen, which graphically shows the number of students per performance level per objective;

Figure 5 is a flowchart illustrating the process of creating and updating rubrics on the RubricOne handheld application, which also shows the process of making user rubrics available to the RubricOne library, which makes rubrics publicly available to other users;

Figure 5A is a snapshot of the edit rubric screen, which also shows the upload flag;

Figure 5B is a snapshot of the edit rubric level screen; which shows the default level weight and the "Set Column" flag, that if checked sets the weight of all objective-levels;

Figure 5C is a snapshot of the edit rubric objective screen;

Figure 6 is a flowchart illustrating the process of creating and updating classes and students on the RubricOne handheld application;

Figure 6A is a snapshot of the edit class screen, which also shows the upload flag that when checked indicates that the class, including its students, should be uploaded or synchronized on the next synchronization action;

Figure 6B is a snapshot of the edit student screen;

Figure 7 is a flowchart illustrating the overall process of managing records on the RubricOne Server;

Figure 8 is a flowchart illustrating the process of search, and copying of publicly available rubrics in the RubricOne library;

Figure 8A is a snapshot of the rubric library;

Figure 9 is a flowchart illustrating the process of adding, importing, and updating of classes and students on the RubricOne Server, which also shows the process of exporting, printing, and saving of classes and students;

Figure 9A is a snapshot of the edit class screen;

Figure 10 is a flowchart illustrating the process of creating, and updating of grading sheets on the RubricOne Server, which also illustrates the process of exporting, reporting, and saving of grading sheets;

Figure 10A is a snapshot of the rubric grading sheet;

Figure 10B is a snapshot of a class report;

Figure 10C is a snapshot of a detailed class report;

Figure 10D is a snapshot of the "student per level per objective" report and example of which is shown in Figure 4G;

Figure 10E is a snapshot of the "student distribution" report;

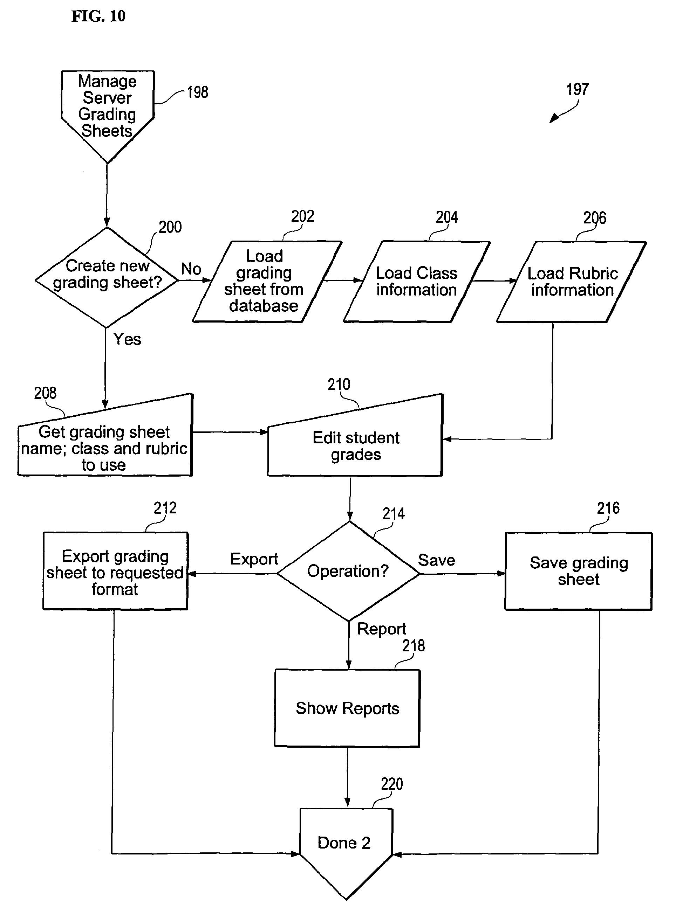

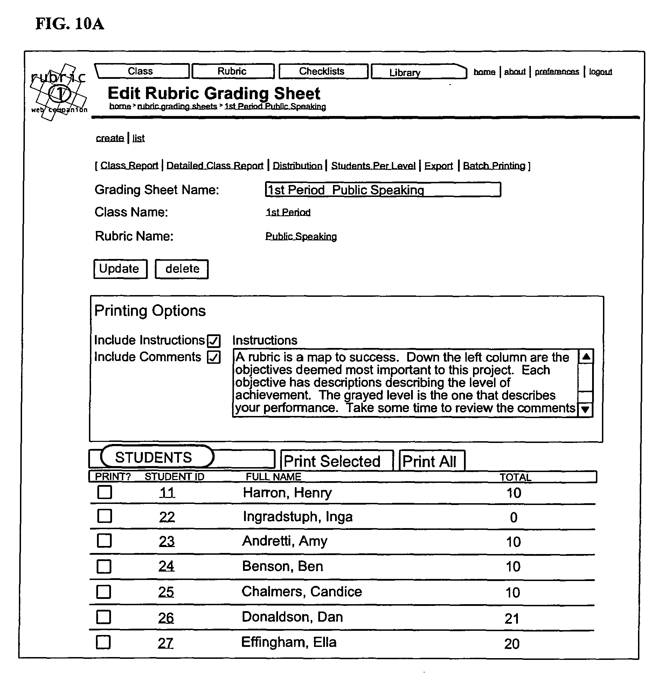

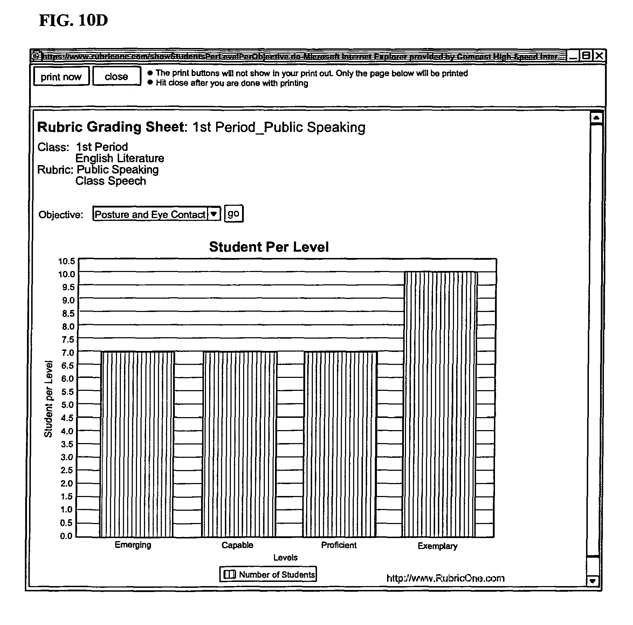

Figure 10D is a snapshot of the export grading sheet screen;

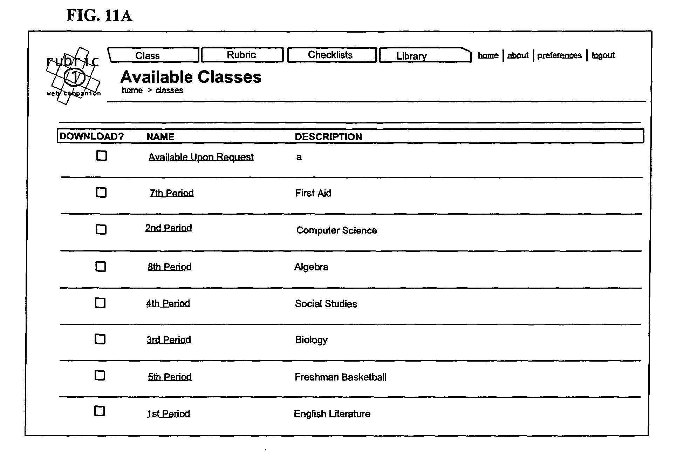

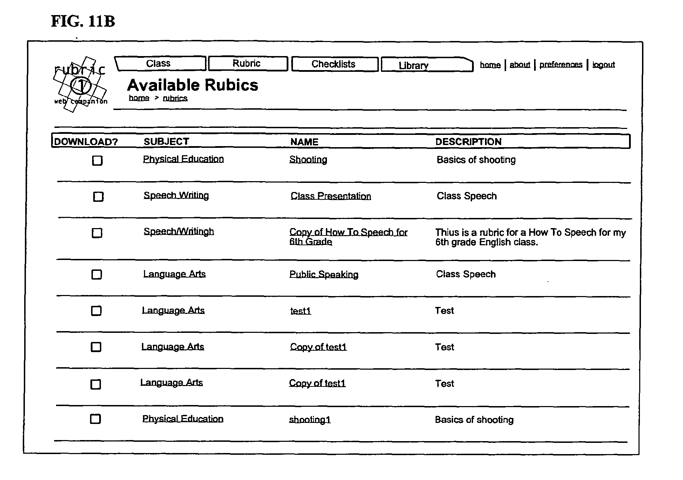

Figure 11 is a flowchart illustrating the process of uploading, downloading, and synchronization of RubricOne records on the RubricOne Server;

Figure 11A shows a list of classes for a user. Also shown are check boxes for making classes available for download to the handheld application;

Figure 11B shows a list of rubrics for a user, which also shows check boxes for making rubrics available for download to the handheld application;

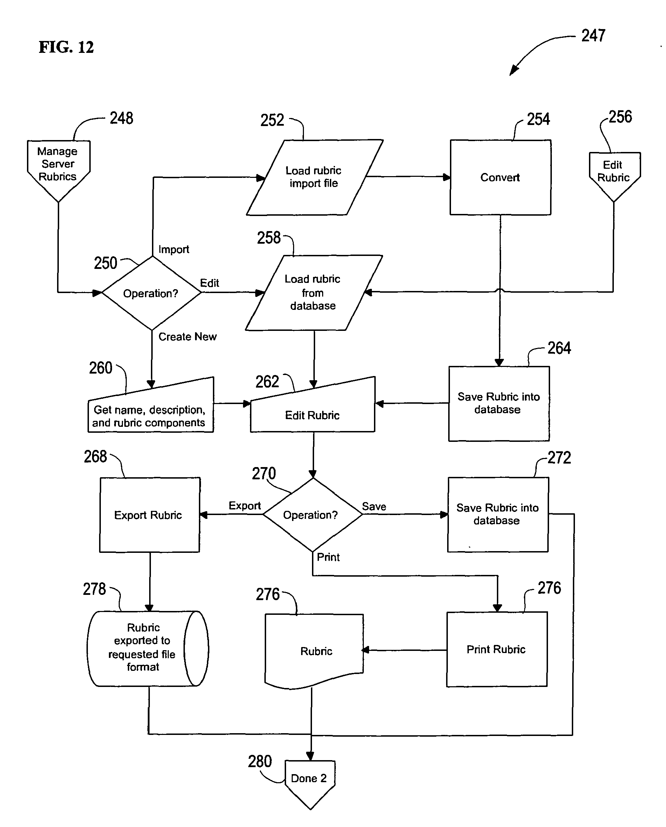

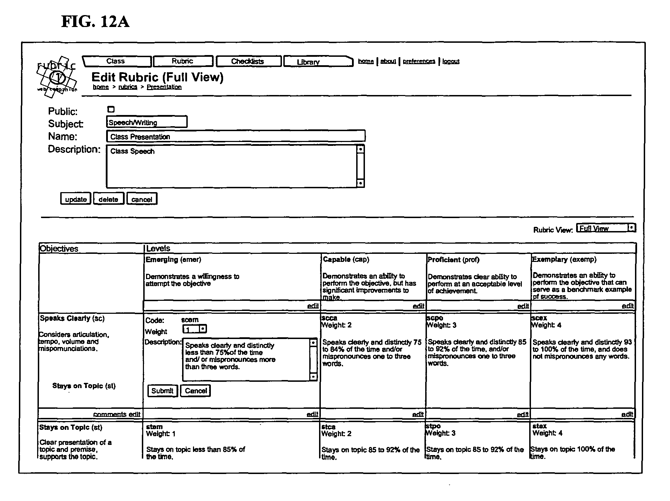

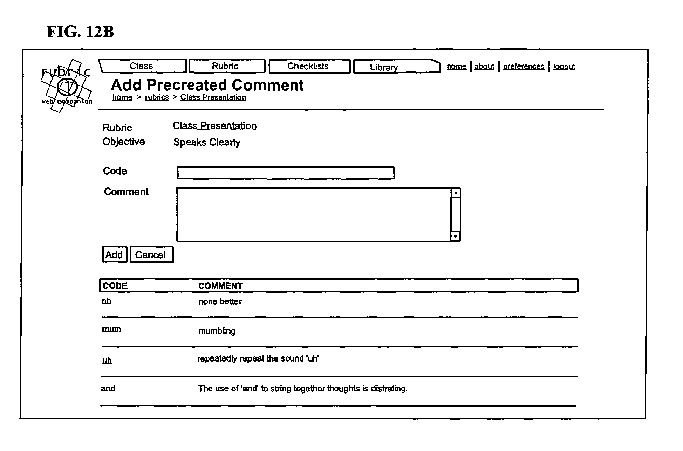

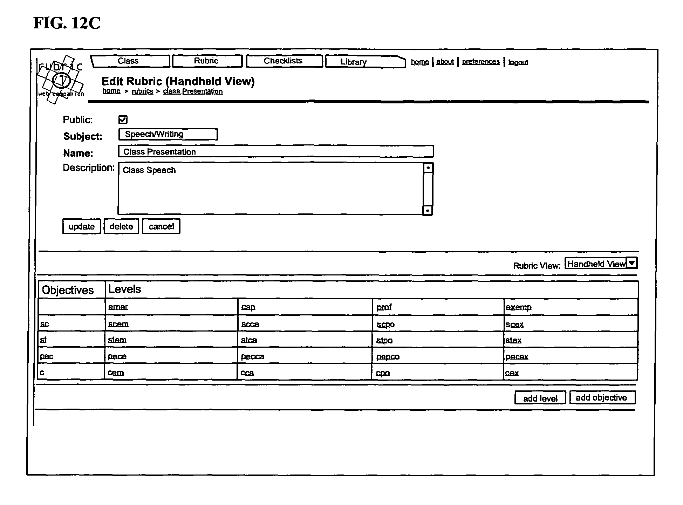

Figure 12 is a flowchart illustrating the process of adding, importing, and updating of rubrics on the RubricOne Server, which also illustrates the process of exporting, printing, and saving of rubrics;

Figure 12A is a snapshot of the edit rubric screen in full view;

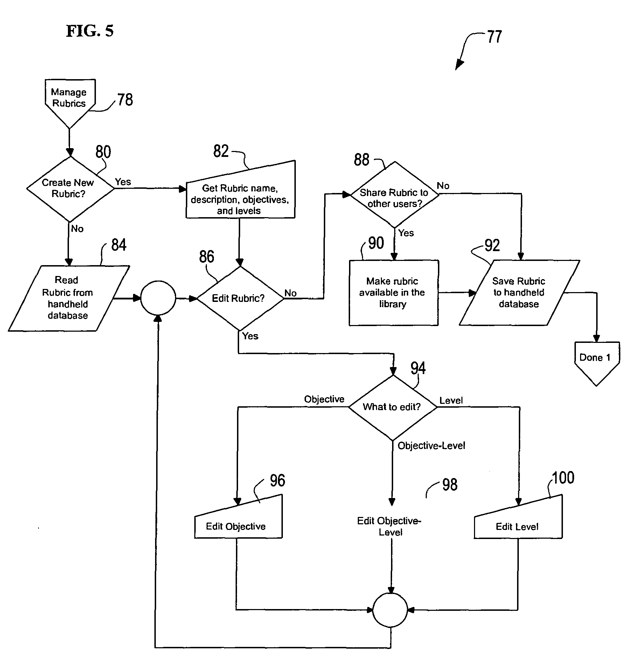

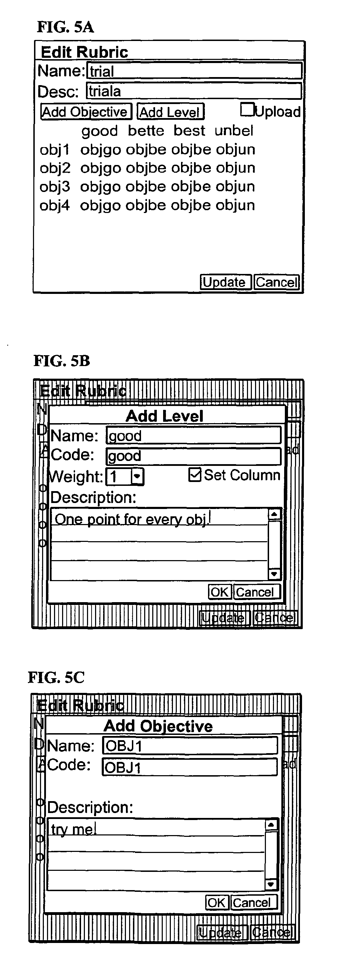

Figure 12B is a snapshot of the edit rubric screen in handheld view, which is a replica of what the rubric would like on a handheld as, for example, discussed with regard to Figure 5A; and

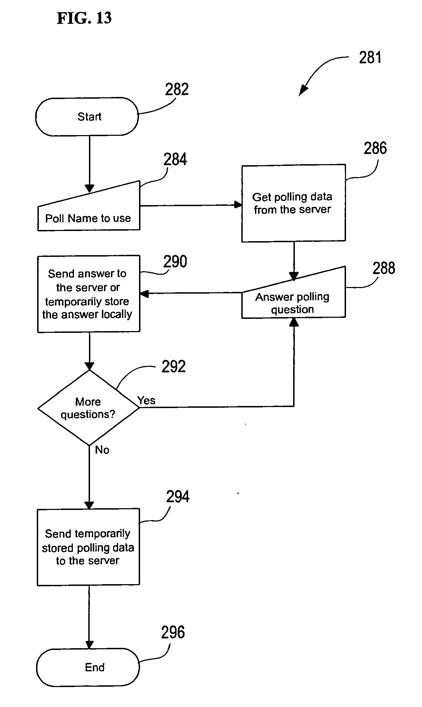

Figure 13 is a flowchart illustrating the process of acquiring polling information.

### DETAILED DESCRIPTION OF THE INVENTION

While the present invention is susceptible of embodiment in various forms, there is shown in the drawings and will hereinafter be described a presently preferred embodiment with the understanding that the present disclosure is to be considered an exemplification of the invention and is not intended to limit the invention to the specific embodiment illustrated. It should be further understood that the title of this section of this specification, namely, "Detailed Description of the Invention", relates to a requirement of the United States Patent Office, and does not imply, nor should be inferred to limit the subject matter disclosed herein.

In the present disclosure, the words "a" or "an" are to be taken to include both the singular and the plural. Conversely, any reference to plural items shall, where appropriate, include the singular.

The present invention allows, for example, a rubric to have a customized scoring system based on user preference. This is important to provide an overall objective score to a subjective assessment for comparisons, pass/fail, etc. A user can assign any score for any Objective/Level achievement by using the present invention. This is very important when a user wants to apply greater importance to attaining certain level(s) for certain objective(s).

The present invention provides, for example, a method and apparatus for managing performance assessments from any location, remote or otherwise, with a multifunctional device. The method includes the steps of accessing a server through an intermediary, a website of the server or utilizing a handheld computer and downloading a set of options to create, edit, and manage a performance assessment.

The present invention also provides, for example, a system and method for providing educational assessment of at least one user using a computer network. The computer network may contain one central sever, an intermediary and at least one remote machine, including but not limited to a handheld computing device, including multifunctional devices. Student performance assessment is captured with a rubric or checklist, graded, and reported on the remote machine. A library of assessment items including rubrics, checklists, and other assessment items not limited to multiple choice, essay, true/false, and matching among other types of items may be included for users to add items and to download and use items. Data can be sent via an intermediary to a central server and/or desktop client for grading, aggregation, and reporting as well as for polling from a multifunctional device.

In accordance with one aspect of the present invention, a user can create and edit a new rubric or checklist from any location at any time utilizing a multifunctional handheld computing device. The newly created or edited rubric or checklist is available immediately for scoring. Results and reports, including aggregated reports, may be viewed immediately on the handheld. Information is stored on the handheld. When it is synched to a remote terminal connected to a central server, the newly created or edited rubric or checklist is automatically saved or updated and the data is stored in a central repository of the central server for further reports and analysis.

In accordance with another aspect of the present invention, rubrics or checklists may also be created on a remote terminal. There are multiple views on the remote terminal including a full computer screen view, a print view, and a handheld computer view. Screens match on the remote terminal's handheld computer view and actually on the handheld computer allowing for one simple user interface regardless of the medium.

In accordance with another aspect of the present invention, rubrics may be created with multiple objectives codes, level codes, and objective/level codes. Checklists may be created with multiple names and codes for groups and items. This allows for viewing and easy creation/edit on the handheld computer.

In accordance with another aspect of the present invention, creation and editing of a rubric on the handheld computer and/or on the remote terminal connected to the central server are each capable of being independent of each other including: attaching objective, level, and objective/level descriptions; attaching pre-populated comments; assigning a point value to an entire level and/or each objective/level; capable of being transmitted via an intermediary to the web companion in its entirety and viewed in the handheld view among other views.

In accordance with another aspect of the present invention, creation and editing of a checklist on the handheld computed and/or on the remote terminal connected to the central server are each capable of being independent of each other including: attaching group and item level descriptions; attaching pre-populated comments; assigning a point value to an item; assigning a point value to a group, including additional points based upon selection of items; assigning key items required to be checked/scored before other items can be checked/scored; assigning key items required to be checked/scored at a certain level in order for other items to be made available to be checked/scored - but not aggregated at the group and/or checklist level; assigning key groups required to be scored before other groups can be opened and/or scored; assigning key groups required to be scored at a certain metric in order for other groups and/or items can be opened and/or scored - but not counted in the overall group and/or checklist score.

In accordance with another aspect of the present invention, merge data from the same rubrics or checklists graded on the computer network and on a remote handheld computer. The data is merged and aggregated to provide group reporting. Three elements determine the append and are selectable by the user, upload, download and date/time stamp. Upload sends data from the client to the computer network. Download sends data from the computer network to the client. Time Stamp sends data from the computer network to the client and vice versa based upon the most recent time stamp.

Data from the device with the most recent time stamp overrides the data from the other; essentially it is an upload and download with a decision. For this section an element is any of the following Grade Sheets, student information, classes, checklists and rubrics. An element can be either created on the client machine or on the computer network. Upon upload, download or by time stamp data appends the overall section (Grade Sheet, class, student information, etc.).

For a Grading Sheet if students 1-10 are graded on the computer network and 11-20 on the client machine (handheld) the data for the Grading Sheet is appended to have students 1-20 in one medium (by upload, download or both as the time stamp). If a student is graded on both, a setting is selected in preferences to never override data or override data based upon the selection of upload, download or timestamp.

In accordance with another aspect of the present invention, the same performance assessment may have multiple graders assessing on multiple handheld devices. After synching, the data is aggregated from the multiple assessments and averaged for an overall score. The same rubric or checklist is distributed to two groups - the clients and the master. The Client(s) are generally a student or peer of the person being assessed. The Master(s) are generally teachers or supervisors of the person being assessed. Both groups, client and master, observe the same event and evaluate it on the same rubric or checklist.

When the data is sent back via the intermediary to the computer network, the data may be merged in various ways for analysis: all data is merged together to display a mean score for the elements of the rubric or checklist; the client groups is merged and the master group is merged and the two means are used for comparison; the client and master groups are weighted and then the two are merged together; for each level score (and overall score, by group and overall) a standard deviation is calculated and the option of removing the outliers is available; calculating a trimmed mean (user defined) is available and the scores inside are used for the calculations; graphs are available for client only, master only and merged as well as comparison of the three; any combination of scores can be evaluated as to significant differences in scoring and flagged for the user. Alpha can be set by the user, but is default to .01 as statistically significant and .05 as significant. Comments can be anonymous or labeled as to whom they were from.

The present invention also provides, for example, a method of creating customizable data queries that may be transmitted immediately between an intermediary device and a remote multifunctional handheld computer known as polling. Polling allows educators access to instantaneous feedback on student performance. The educator sends a question or survey or rubric or checklist or other query to at least one multifunctional handheld computing device or more. It provides an educator the ability to identify whether or which students understood the recent material that was taught.

It also can be utilized for other lesson plans to incorporate technology into the classroom and provide more engaging methods of teaching. Ultimately, this should help more students lean more material. Polling is defined as instantaneous data transfer of a response (response transfer) from one or more client machines to the computer network. This is accomplished in several ways but the most important will be through the 802.11 wireless protocols.

A session will be started by the instructor and this will generate a random security code. The students will 'sign on' by opening a program on their handheld and putting in a student identification signature such as a student ID, a code for the authoring entity (such as the district, school, teacher, whomever it is that pays for the subscription) and the security code. These keys establish that the data be sent to the appropriate account. The response transfer can be initiated by a person asks a question and the user of the client computer responds with a choice selection (such as a multiple choice question or true/false question, putting elements in order (checklist property)), written response or calculation from a calculator and sends it to the computer network via the intermediary. The instructor can send a request for a response, generally in the form of a question, to the client machines (handhelds) where the user of the client machine send back a response. The instructor can display a question to the audience, generally with a projector. This can be within the computer network user interface which will also display information. The display of information can be in the form of how many responses are registered based upon many are available to respond.

A graphical representation of this can be frozen and then the clients are given an opportunity to change their response and this is compared to the initial trial, this can be charted over an infinite number of changes. Responses are kept and stored as student response data that can be reviewed in such reports as a distribution of correct/incorrect answers, and item analysis, all student responses per question. The educational concept behind this is all students will respond to a question. Questions can be in groups such as standards for learning, the instructor can gather information about how the students responded to questions and based upon that data evaluate the student and class ability to perform at a given level of discussion/conversation and even a game like situation.

The present invention also provides, for example, a method to create a rubric and checklist library stored in a central repository on the central server. This may be accessed by any remote terminate connected through an internet or intermediary connection. Educators often utilize similar assessment criteria in grading similar performances. Educators often are more than willing to help others in their fields with ideas. The library allows them to make their Rubrics and Checklists public for others to download and use. The system will also add various keywords and statistical information about each rubric or checklist in the library. The library will be able to be stored by the following criteria: key words (this includes descriptions, skills or units, or any other customizable entry); State Standard or National Standard; Subject/Area; Grade Level; Most popular true historical; Most popular over a given time frame; Most popular over a given number of downloads; Any combination of the above. Users will be able to download any rubrics or checklists in the Library and use either an editable version or a non-editable version. With the editable version, a user would be able to make changes to that particular rubric or checklist and use it. The Library will also track the original user that input the rubric or checklist in the Library and how many other users download their rubric or checklist.

The present invention also provides, for example, a method to create an item library stored in a central repository on the central server. This may be accessed by any remote terminal connected through an internet or intermediary connection. Items are any assessment question utilized to test students. Items can include are not limited to the following types of questions: Multiple Choice questions; True/False questions; Matching questions; Essay questions; Constructed Response questions; and Fill in questions. Educators often utilize similar test items to assess students.

Educators often are more than willing to help others in their fields with ideas. The Library allows them to make their Assessment items public for others to download and use. The system will also have a mechanism to add information through initial entry and then through advanced technologies to add various keywords and statistical information about each item in the Library.

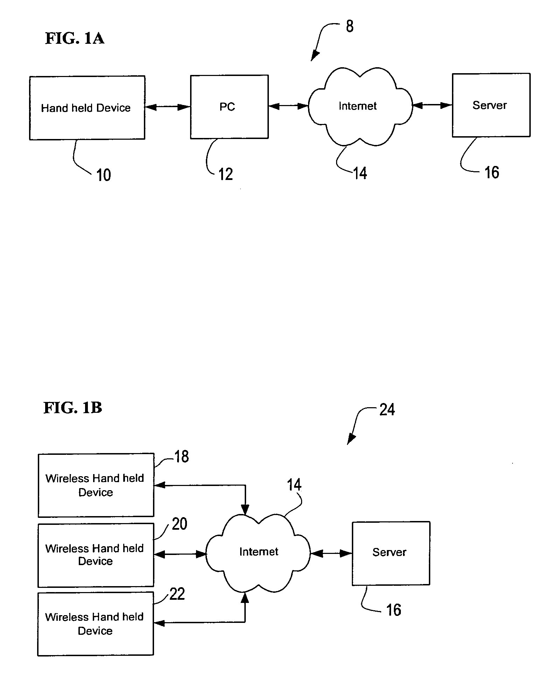

Referring to Figure 1A, an exemplary embodiment of the present invention is shown. In accordance with this embodiment, a user has the ability to create, edit, and/or score performance assessments from any location at any time. The system 8 includes a mobile handheld computer 10, a personal computer 12, a server 16, and an internet connection 14 between the serve 16 and the PC 12. As discussed in greater detail hereinafter, RubricOne software resides on the RubricOne server 16, and is accessed through the internet 14 by either a PC 12 and/or a handheld computer 10. A RubricOne software conduit is installed onto the PC 12. A RubricOne handheld application is installed onto the mobile handheld computing device 10. The handheld computer 10 has one or more communication ports to upload and download data to and from the PC 12 through the RubricOne software. This provides complete mobility to utilize the system from any location, to be able to grade an assessment or inspect an item anywhere, any time.

The specific embodiment of the invention shown in Figure 1A is an ASP model stored on server 16. Users access it through passwords and logins over the internet 14 from either a PC 12 or a handheld device 10. Users can access RubricOne from any location with internet access. Users can download the information required to do the assessment by synchronizing with their PC. After grading the person or item, users upload the data to the PC via the RubricOne software discussed in greater detail hereinafter. The handheld device may be a multifunctional handheld. It can run on a Palm operating system or pocket pc or windows. There is no restriction to use the invention on a proprietary handheld device.

Another embodiment of the invention is shown in Figure 1B. In this exemplary application of the present invention, the system 24 allows three different users to use one of multifunctional handheld devices 18, 20, and 22. Each multifunctional handheld computing device runs, for example, the Palm Operating System, Pocket PC Operating System, or Windows Operating System. It is not limited to a proprietary handheld device. Each one of the handheld devices may be utilized at the same time to access the RubricOne server 16 from multiple locations. An organization may have multiple users accessing RubricOne's server at the same time and the program has the ability to aggregate and disaggregate data for overall organization use. In this exemplary embodiment of the invention, the devices 18, 20, and 22 include wireless internet options, that allow them to communicate with the server 16 without having to be tied down to the physical location of a docking PC that allows non-wireless hand held devices to communicate through the internet.

In one embodiment, the Rubrics, each type of Checklist, and the Class Information are not only utilized on the handheld, but may be CREATED on the handheld as well. This allows users to create Performance Assessments from any location at any time without being connected to the server. Once created, users can upload all of the new information to the program on the server.

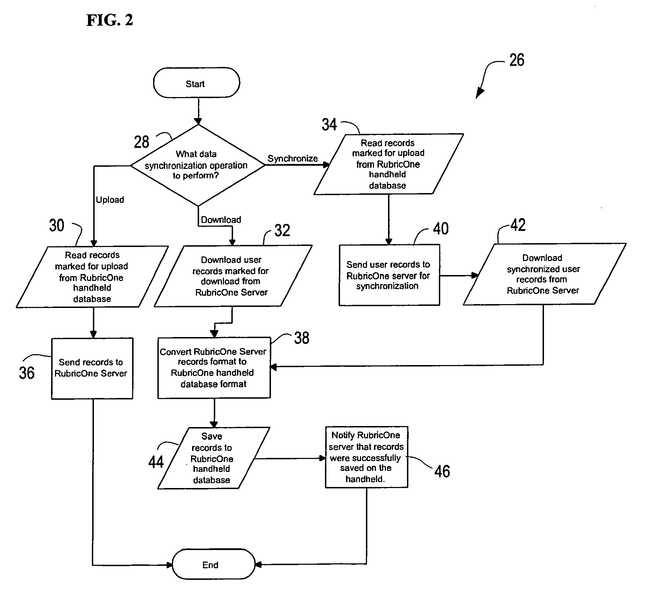

One embodiment of the invention shown in Figure 2 features the process 26 of the logical flow of data when synchronizing between the RubricOne handheld application and the RubricOne Server on wired and wireless networks. As illustrated in block 28, a user may choose any one of three functions to be performed from the handheld: upload data, download data, and synchronize data. A user may choose to Upload data, which transfers data from the RubricOne handheld application to the RubricOne Server application. If a user selects to Upload data, then any item in RubricOne's handheld database that has been marked for upload will transfer that information from the handheld device to RubricOne's server database as illustrated in blocks 30 and 36. This data can include rubrics, checklists, class information, demographic information, scores, and other items.

Downloading data transfers the data from the RubricOne Server application to the RubricOne handheld application. If a user selects to Download data, then any item that has been marked for download from the RubricOne server will transfer to the handheld device as illustrated in blocks 32, 38 and 44. First, the user selects the records to be downloaded, block 32. Next, RubricOne will convert its server records to RubricOne handheld database format, block 38. Then, it will send the information to the RubricOne handheld database, save the records here, and notify the user that records were successfully saved on the handheld as illustrated in blocks 44 and 46. This data can include rubrics, checklists, class information, demographic information, and other items.

Synchronizing the data sends data each way, to and from the RubricOne handheld application and the RubricOne Server application. If a user selects Synchronize, the program will identify points that have been updated on the handheld and points that have been updated on the website and synchronize these points on each device as illustrated in blocks 34, 40, 42, 38, 44, and 46- First, the program will read records marked for upload from the RubricOne handheld database, block 34. Next, these records are sent to the RubricOne server for synchronization, block 40. Then, the synchronized user records are downloaded from the RubricOne server, block 42, and then the records are converted and saved as illustrated in blocks 38 and 44. Finally, the user is notified that the records were successfully saved on the handheld as illustrated in block 46. The synchronizing mode will not be utilized all of the time since there will be overwriting considerations to make in this mode.

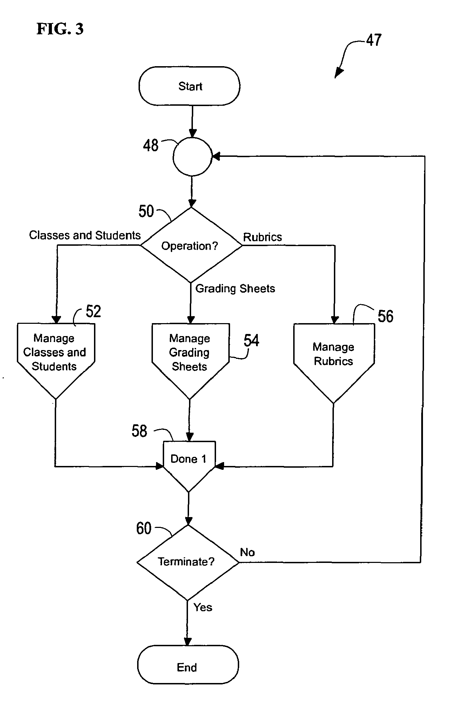

Figure 3 is a flowchart illustrating one embodiment of the overall process 47 of managing records on the RubricOne handheld application. Users have the ability to manage (create, edit, administer, score) Classes and Students 52, Grading Sheets 54, and/or Rubrics/Checklists 56. Once they have completed an operation, a user may choose another task, use the handheld to grade a Performance Assessment, or mark records for Upload.

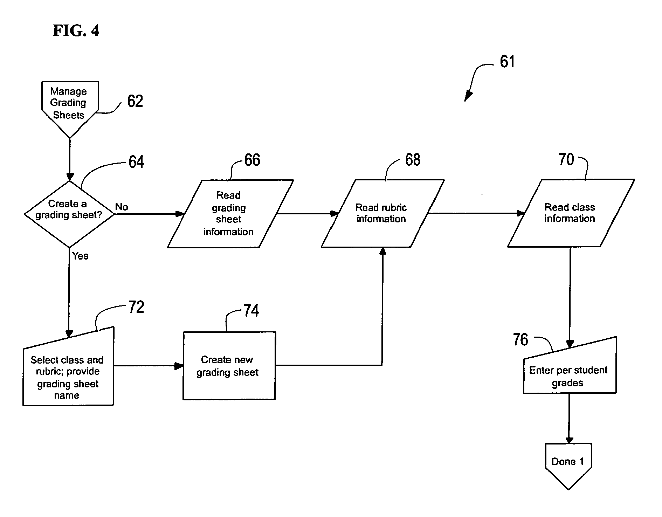

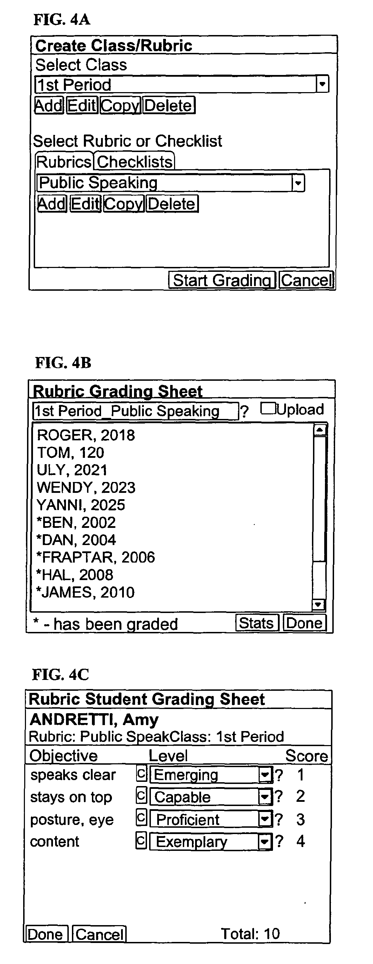

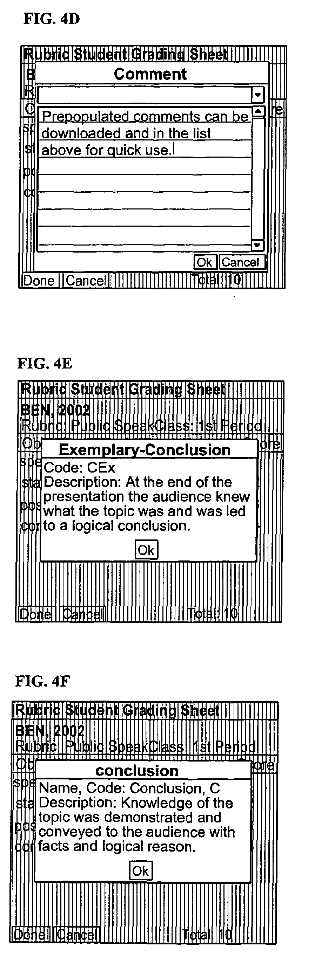

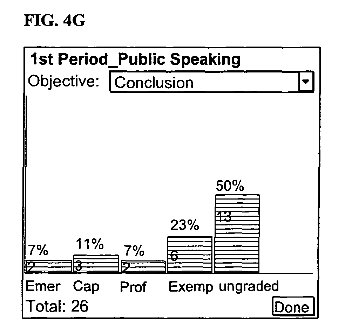

Figure 4 is a flowchart illustrating one embodiment of the process 61 of creating and updating of grading sheets on the RubricOne handheld application. If a user elects to create a Grading Sheet, block 64, then they will select the appropriate Class and the appropriate Rubric/Checklist and provide a Grading Sheet name as illustrated in block 72. The new sheet will then be created, block 74, and the handheld will then read the rubric information, block 68, and class information, block 70. The user can then enter the student grades as illustrated in block 76. If the user does not select to create a new grading sheet, the handheld will read the grading sheet information, block 66, and then read the rubric and class information as illustrated in blocks 68 and 70.

Figure 4A is a snapshot of one embodiment of the RubricOne Grading Sheet creation screen just described. Once this is done, a user may begin to start grading the item to be assessed. Open the Grading Sheet and select the item to be graded as shown in the snapshot in Figure 4B.

Figure 4C is a snapshot of one embodiment of the Item Grading Sheet screen. Shown are the Objective name, available Levels per Objective, Objective score, and the Comment box link. A user decides upon an Objective to score and selects the corresponding drop down list under the Level. Once the Level choices appear, the user selects one as a grade. Once selected, the appropriate Score populates the screen to the right. An overall score appears at the bottom of the screen, updating after each Objective - Level is selected. For each objective, after a level is selected on the Rubric or the pass/fail or score marked on the Checklist, a user may add a note or comment related to that objective through the Comment dialogue box.

Figure 4D is a snapshot of one embodiment of the Comment dialogue box. A user may type in comments or choose the drop down arrow to add Pre-populated comments. If they select a Pre-pop comment, they may still edit that information. For example, a Pre-pop comment for something listed on a building inspection might indicate that "a plumbing vent is off spec''. A user may add that it is off spec "by 2 feet". These Pre-populated comments are entered by the user when creating the Rubric or Checklist. They are customizable. RubricOne provides the user with a list of the items and their scores immediately upon completing the grading sheet.

Again, this program allows for a completely customizable scoring system. A user may grade a device as failing, and also give it a score of 6 out of 10 points indicating it is failing, but may be close to passing. A grader may score it 2 out of 10 to indicate the device is not close to passing.

In any of the cases of Checklists and Rubrics, graders can easily add Comments to each graded objective. Within the Comments section, there may also be what are called Pre-populated Comments. In many Performance Assessments, a grader will use the same type of comments for the majority of the percentage of overall comments. These can be customized and entered into RubricOne prior to grading. When a grader opens the Comments dialogue box, they can click on the drop down arrow and automatically select one of the Pre-pop Comments or write their own. If they choose a Pre-pop comment, they may still edit it.

Conditional Checklists may also be created routinely within RubricOne. In this instance, there may be multiple lists of items to grade. If one item or one group of items does not meet a certain scoring criteria, then the entire item being graded receives a failing grade. The grader may still provide scores for all criteria being assessed. This allows the ability to show that maybe the item being graded would pass if it just resolves one or a few issues. The item being graded does well overall, but it needs to have this condition resolved.

The program also allows for multiple scores of the same item being assessed over a period of time. If an item needs to be assessed multiple times during the same day or week, the customizable system allows for this. If an item is graded at 8:30 am, and then it is graded again at 12:30 pm, and then it is graded again at 4 pm, the program will track all scores and times for each score. It also allows the ability to use any type of criteria rather than a numeric score during those time slots. For example, the item may have rated as Good at 8:30, Poor at 12:30, and as Excellent at 4 pm. Again, this criteria name is customizable.

Classes are the items being assessed. In Education, it can be a list of students. In a manufacturing environment, it can be a list of equipment or parts or people for safety inspections. In a building environment, it may be a list of buildings (addresses) or restaurants to be inspected. Once again, the program offers the ability to customize this piece.

Figure 4E is a snapshot of one embodiment of the Objective-Performance Level information. If a user doesn't recall what a certain Level definition was, then they can click on the Question Mark next to the Level selection column. When they do this, the Objective-Performance Level information screen appears to provide a complete description.

Figure 4F is a snapshot of one embodiment of the Objective information. Prior to selecting a Level for the Objective, a user may want to be reminded of the complete definition of the Objective. It informs the user of exactly what they should be grading.

Figure 4G is a snapshot of one embodiment of the class statistical information screen. It graphically shows the number of items per performance level per objective. After a user taps on the Stats button, the graph displays the results. When a user taps on one of the bars in the graph, a window will pop up with the items or people that attained that level. When a user taps on the Level, a window pops up providing the complete Objective-Level description to remind the user what was exactly attained. This is important to note that RubricOne provides immediate statistical feedback on the handheld. This allows a user to determine how to make changes quickly based upon noted strengths and weaknesses. It provides users an opportunity to focus actions on weak areas immediately rather than continuing work on areas that don't need help.

Figure 5 is a flowchart illustrating one embodiment of the process 77 of creating and updating Rubrics or Checklists on the RubricOne handheld application. Since the handhelds are mobile, portable, it is important to note that RubricOne provides a user the ability to create and edit Rubrics or Checklists from any location at any time. If a user decides to create a new assessment or adjust their existing assessment, it can be done immediately.

From the handheld, the user can choose whether or not to create a new Rubric as illustrated in block 80. If the user chooses to create a new Rubric, he/she will be asked to enter the Rubric name, description, objectives, and levels, block 82, if not, the Rubric information will be read from the handheld database, bock 84. From there, a user can choose whether to edit the Rubric, block 86. If the user chooses to edit the Rubric, he/she can choose to edit the objective, the objective-level, or the level as illustrated in blocks 94, 96, 98, and 100. Figure 5 also illustrates that once a user creates a Rubric or Checklist they may share it in RubricOne's public library as illustrated in blocks 88 and 90. The public library is accessible to all users. It allows a user to search and sort through various Rubrics or Checklists by a variety of criteria, and then they may choose to Copy it to their own personal Rubric or Checklist List. Once in their personal List, the user may choose to use the Rubric or Checklist as it is, or they may edit it as illustrated in block 86. The RubricOne Library provides users the ability to create and use assessments quickly and easily, to share assessments with others, and to learn from others to create better assessments. RubricOne's Library is divided into sections. The first is the overall Public Library. All users of RubricOne have access to this Library to share and to copy Rubrics and Checklists. The second layer is an Organizational Library. This is a semi-private Library for use only by noted users for a particular organization. All users of the organization would have access to copy and use these Rubrics and Checklists while anyone outside the organization would not be allowed to view, copy, or use the items in this Organization's Library. The third layer is simply a Personal Library. Each user has their own Rubric or Checklist List. Unless the user chooses to share any of these in the Public Library, then they are private only to that user.

Figure 5A shows a snapshot of one embodiment of the Edit Rubric screen on the handheld. If a user taps on any of the current Levels or Objectives or Objective-Level codes, then the user may edit that item including it's score or weight level. It also shows the Upload flag. By checking this box, the next time a user synchronizes with the server, it will upload the information to the RubricOne Server database.

In one embodiment, by tapping the Add Objective button or the Add Level button, a user may add a new Objective (Figure 5B) or Level (Figure 5C) on the handheld application.

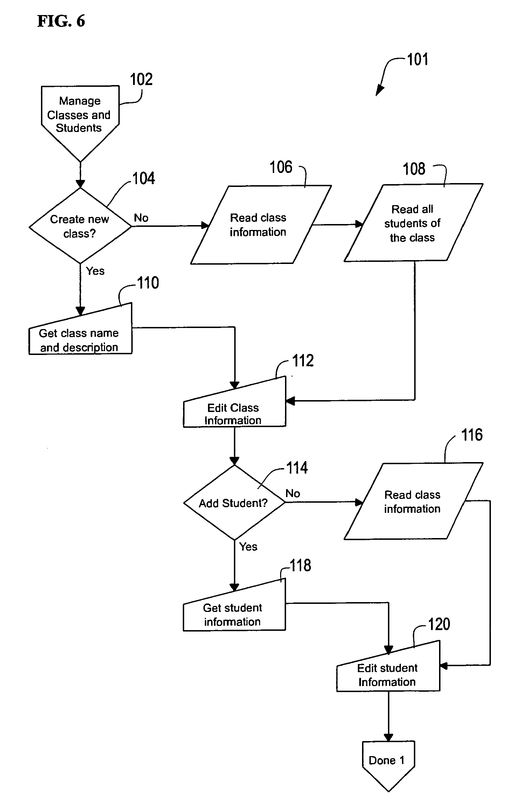

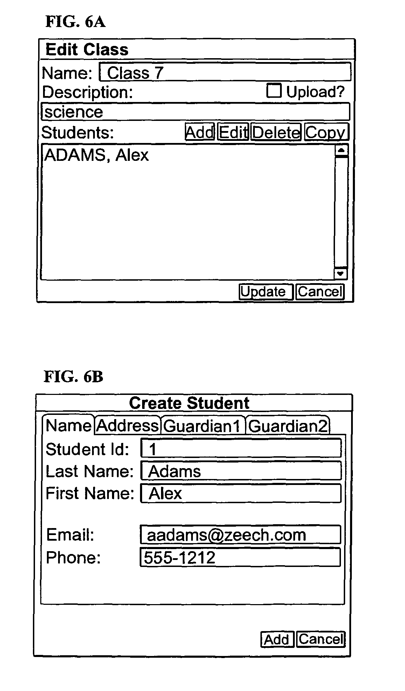

Figure 6 is a flowchart illustrating one embodiment of the process 101 of creating and updating classes and students on the RubricOne handheld application. While described as a Class, it is essentially a database of students, people, or other items to be assessed. Again, these can be added or edited on the handheld at any time at any location. If a user finds a situation where they may want to assess an additional person or item with a particular performance assessment, it can be done quickly and easily. In order to manage classes and students, first a user determines whether to create a new class, block 104. If the user decides to create a new class, the user inputs the class name and description, block 110. If the user decides to not create a new class the handheld reads the information on the students and the class as illustrated in blocks 106 and 108. Next, the user edits class information, block 112. The user can then decide whether to add a new student, block 114. If the user decides to add a new student, then the user inputs the information on the student as illustrated in block 118 and edits the information, block 120. If the user decides to not add a new student, the handheld reads the class information, block 116, and the user can then edit any student information 120.

Figure 6A is a snapshot of one embodiment of the Edit Class screen. This is where a user may add people or items, edit them, or delete them. This screen also shows the upload flag. When checked, it tells the system to automatically update the RubricOne Server database during the next synchronization. It will update the class as well as all students or items in that class.
Figure 6B is a snapshot of one embodiment of the Edit Student or Item screen. This allows a user to update a specific item with various demographic information.

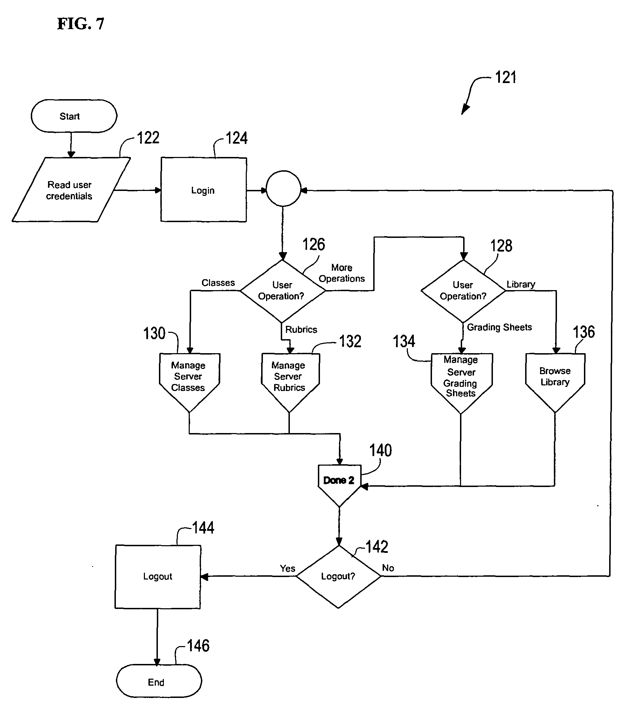

Figure 7 is a flowchart illustrating one embodiment of the overall process 121 of managing records on the RubricOne server. The site is password protected. Once a user logs in as illustrated in block 122 and 124, he/she may choose to manage Server Classes 130, Server Rubrics 132, or choose more operations as illustrated in block 126. If a user chooses more operations, from there, block 128 illustrates that the user can choose to manage grading sheets 134 or to browse the library 136. Finally, when the user is finished, he/she can logout as illustrated in blocks 140, 142, 144, and 146.

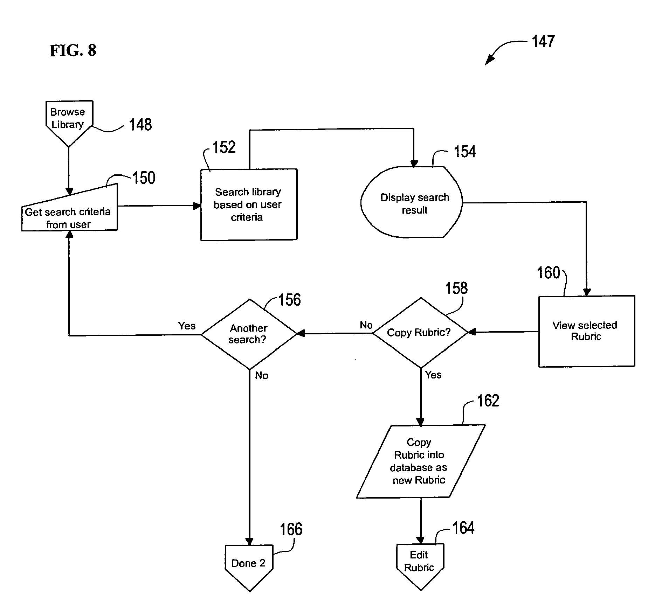

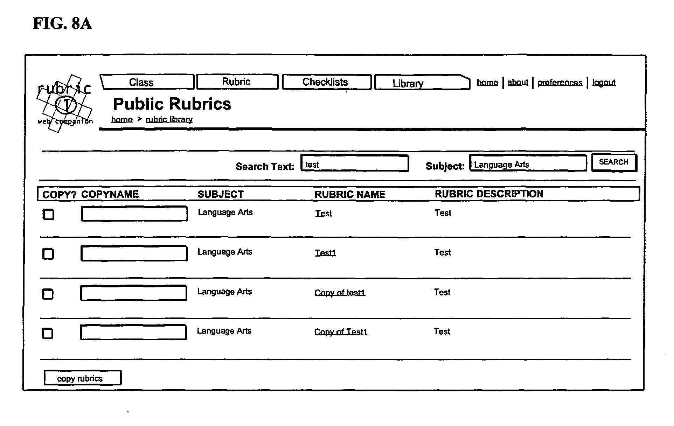

Figure 8 is a flowchart illustrating one embodiment of the process 147 of searching and copying publicly available Rubrics or Checklists available in either the RubricOne Public Library or and Organizational Library. A user may search and sort through various Rubrics or Checklists by a variety of criteria and then they may choose to Copy it to their own personal Rubric or Checklist List. First, the search criteris is obtained from the user, block 150, then the library is searched based on the supplied search criteria, block 154. A user can then choose and view one of the rubrics, block 160, and can then either copy the rubric, as illustrated in blocks 158, 162, and 164, perform another search, block 156, and finish searching, block 166. Once in their personal List, the user may choose to use the Rubric or Checklist as it is, or they may edit it as illustrated in block 164.

Figure 8A is a snapshot of one embodiment of the RubricOne Public Library. This particular screen has been searched and sorted by Subject. There are a handful of criteria to use to search the Library including by state standards for Education. A user checks the Copy flag to indicate they want to copy that particular Rubric or Checklist to their Personal List. The user has the option to rename the Rubric or Checklist as well.

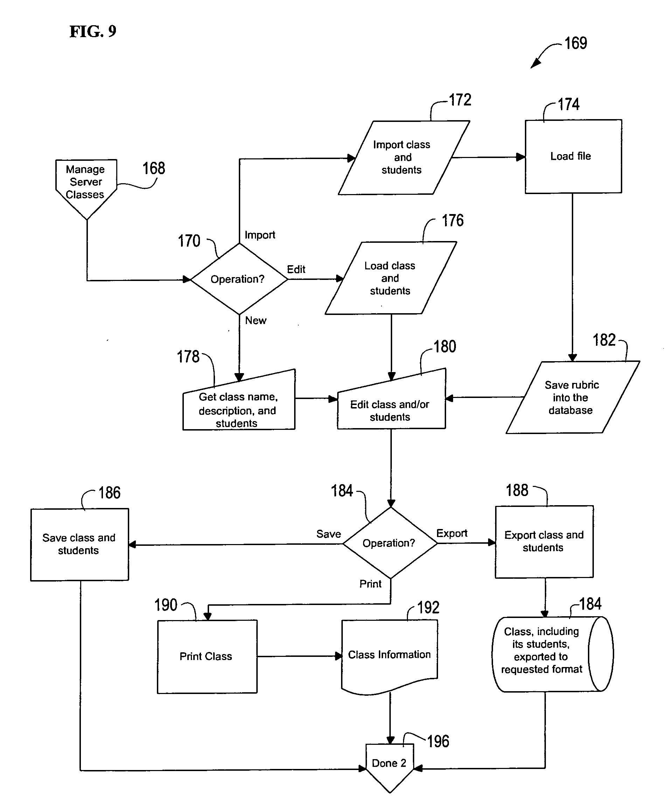

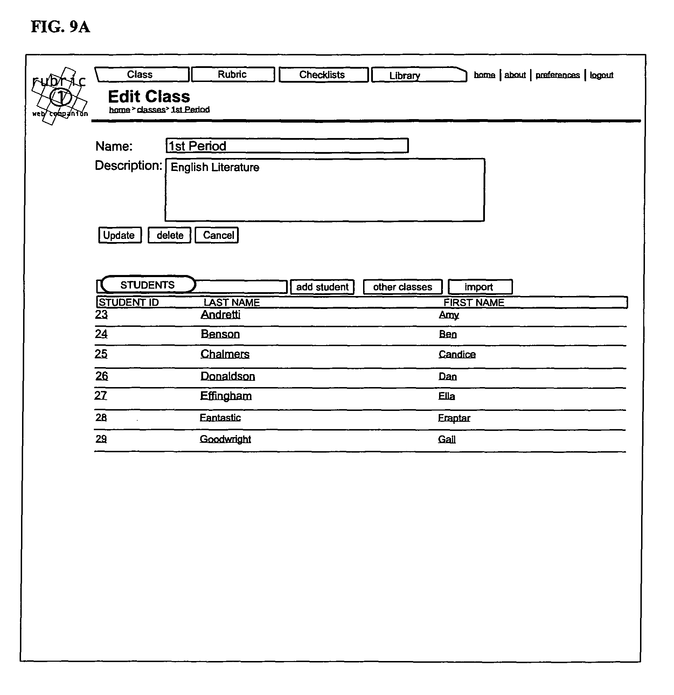

Figure 9 is a flowchart illustrating one embodiment of the process 169 of adding, importing, and updating classes or groups and students or items on the RubricOne server. RubricOne allows users to enter this information manually or by importing it. The drawing also illustrates the process of exporting, printing, and saving of classes and students. As illustrated in block 170, a user can choose to import, edit, or create a new class and students. If the user selects to import the class and students the file is loaded and the rubric is saved into the handheld database and then the user can edit the classes and students as illustrated in blocks 172, 174, 182, and 180. If the user selects to edit existing classes and students, the classes and students are loaded from the handheld database and then the user can edit the classes and students as illustrated in blocks 176 and 180. RubricOne allows exporting the data in a variety of formats, block 184. A user can export the class information as shown in blocks 188 and 195, print the class information as shown in blocks 190 and 192, or save the class of students as shown in block 186.

Figure 9A is a snapshot of one embodiment of the Edit Class screen. A user may access any of the student or item information by clicking on the name listed.

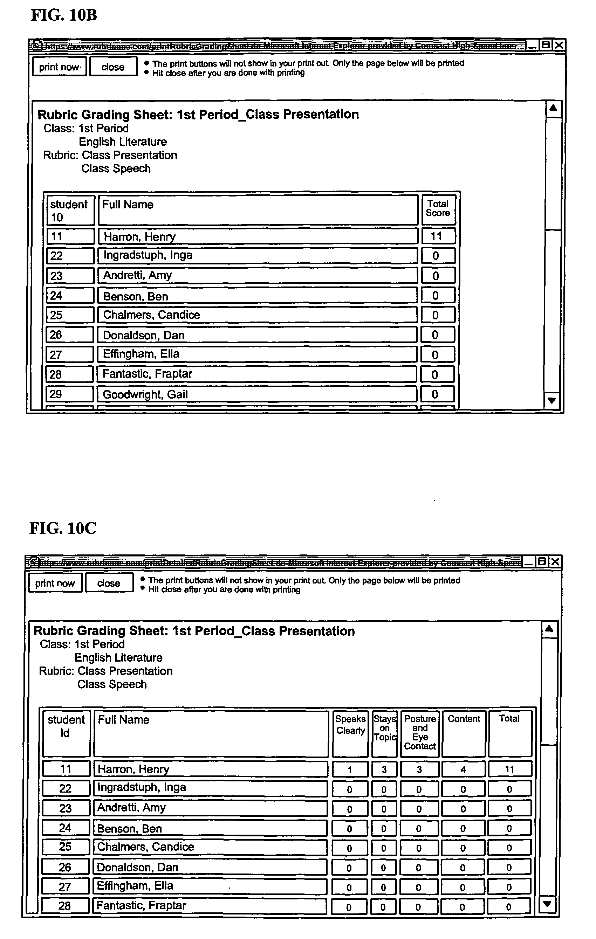

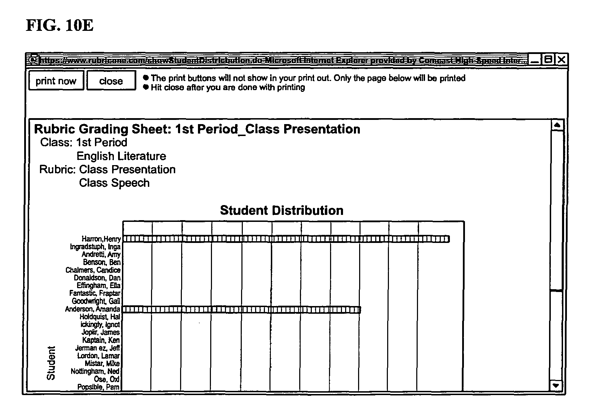

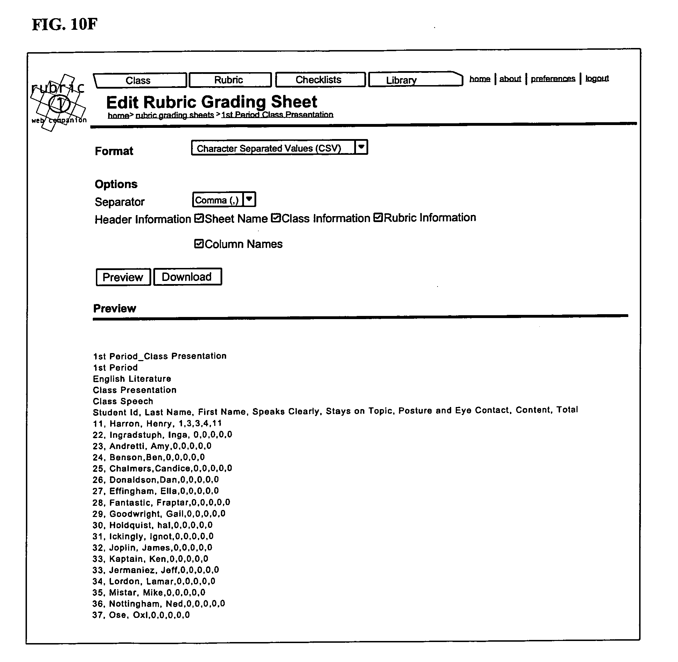

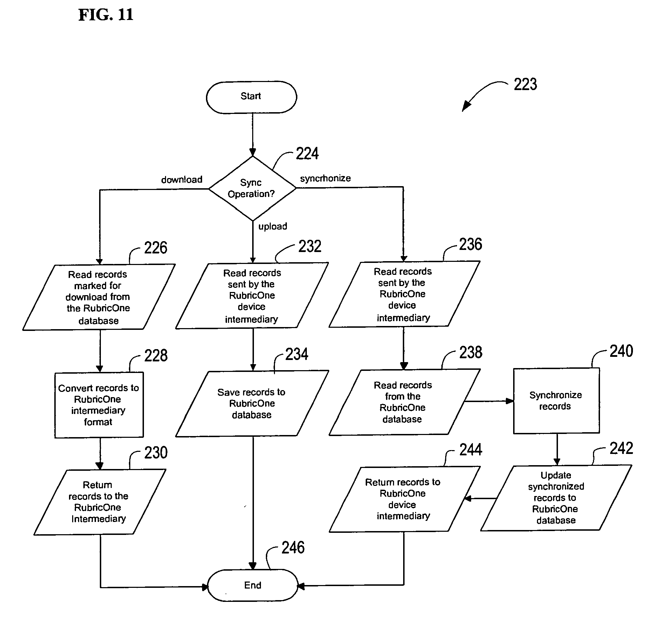

Figure 10 is a flowchart illustrating one embodiment of the process 197 of the management of Grading Sheets on the RubricOne server. Grading Sheets become the actual screen user's grade or score people or items. Users can choose to edit student/item grades as in blocks 200, 202, 204, 206 and 210, or they may create a new Grading Sheet as illustrated in blocks 200 and 208. To create a new one, a user selects a Class or Group and matches an assessment, either a Rubric or Checklist, and RubricOne creates the Grading Sheet as in block 208. A user can score with the Grading Sheet from the RubricOne server, or they may score it on the RubricOne handheld application and upload the results to the server. With the grading sheet, a user can select to export, report or save the grading sheet information as illustrated in blocks 214, 212, 216, and 218.

A user will save the Grading Sheets on the RubricOne server or upload the saved Grading Sheets from the RubricOne handheld application and save them on the servers. From the RubricOne server, a user may then select to view, print, or email reports as in block 218. A user may also select to export the data from RubricOne server in a variety of formats as in block 212.

Figure 10A is a snapshot of one embodiment of a Rubric Grading Sheet. Users view the Grading Sheet Name, Rubric Name, the Class or Group Name, instructions, and the list of student or item names and their respective scores. Rubric or Checklist Name and Class Name or Group Name are hyperlinks. Clicking on these will take a user to the respective item's View/Edit screen. Student or Item ID's and Names are hyperlinks to that student or item's actual Grading Sheet.

Figure 10B is a snapshot of one embodiment of a Class or Group Report. This report shows basic details such as individual scores, class or group means and medians, and other basic statistics.

Figure 10C is a snapshot of one embodiment of a Detailed Class Report. This report shows the same information as the Class or Group Report and also breaks out the scores of each Objective scored and provides means and medians for those Objective scores.

Figure 10D is a snapshot of one embodiment of the Student Per Level Per Objective report. This is a bar graph showing how many students or items achieved at each particular Level of an Objective. This is an important report to indicate strengths and weaknesses.

Figure 10E is a snapshot of one embodiment of the Student or Item Distribution Report. This is a bar graph indicating where each student scored overall.

Figure 10F is a snapshot of one embodiment of the Export Grading Sheet screen. Users choose from comma, pipe, or tab delimited, and they choose what information to export as well. This allows users to utilize the data in other programs.

Figure 11 is a flowchart illustrating one embodiment of the process 223 of uploading, downloading, and synchronization of RubricOne records on the RubricOne server. During a synchronization operation, a screen will appear on the PC workstation asking for a user name and password. It will then ask if you want to download, upload, or synchronize the data as shown in block 224. If a user chooses download, then RubricOne reads the records from the RubricOne database that have been identified for download to the handheld application as illustrated in block 226. RubricOne then converts the records to the RubricOne intermediary format as in block 228, and then returns the records to the RubricOne intermediary as in block 230. RubricOne automatically converts the information, rubrics and checklists from one format to the next, from PC View to Handheld View or from Handheld View to PC View, to optimize viewing on any device.

If a user chooses upload, then RubricOne reads the records from the device intermediary and saves those to the RubricOne server database as illustrated in blocks 232 and 234.

If a user chooses synchronize, then RubricOne reads records sent by the device intermediary as illustrated in block 236, reads records from the RubricOne server database as in block 238, and then synchronizes the records as illustrated in block 240. RubricOne then updates the records on the RubricOne server database, and then returns records to the device intermediary as illustrated in blocks 242 and 244.

Figure 11A shows one embodiment of a list of Classes or Groups for a user. Also shown are the download checkboxes to make the Class or Group available for download to the handheld application. When a checkbox is clicked, that Class or Group becomes highlighted to help the user clearly view those that will be downloaded during the next synchronization.

Figure 11B shows one embodiment of a list of Rubrics and/or Checklists for a user along with the checkboxes to make the Rubric or Checklist available for download to the handheld application.

Figure 12 is one embodiment of a flowchart illustrating the process 247 of adding, importing, and updating Rubrics and/or Checklists on the RubricOne server. Also shown is the process of exporting, printing, and saving of Rubrics or Checklists. First, a user may choose to import, edit or create a new Rubric, block 250. If the user selects to import a rubric the Rubric is loaded, converted and saved into the handheld database as illustrated in blocks 252, 254, and 264. If the user chooses to edit the Rubric, the Rubric is loaded from the database as shown in block 258. If the user selects to create a new Rubric, he/she then provides the name, description and other rubric components, block 260. Next, the user can edit the Rubric, block 262, and then decide whether to export, save, or print the rubric information. If the user selects to save the Rubric, the edited Rubric is saved into the handheld database, block 272. If the user selects to export the Rubric, the Rubric is exported to the requested file format, blocks 268 and 278. If the user selects to print the Rubric, the Rubric is printed through the desired device, blocks 274 and 276.

RubricOne allows users to view Rubrics or Checklists in three Views on the server: Full View, Handheld View, and Print View. Figure 12A is a snapshot of one embodiment of the edit Rubric screen in Full View. Full View utilizes the entire PC screen and is the better view when creating and editing Rubrics or Checklists. Figure 12C is a snapshot of one embodiment of the edit Rubric screen in Handheld View. This provides the user the ability to view just how they will view their current Rubric or Checklist on the handheld from the PC. Print View provides the user the ability to see an actual printed page when printed.

Figure 12B is a snapshot of one embodiment of the Add Precreated Comments screen. A user may always add Comments in the comment dialogue box for any Objective being graded. Often when grading a particular Objective, the same comments tend to be written multiple times. The Pre-populated Comments screen allows a user to add the primary or most popular comments, rules, or other notes to be made for that Objective. This can be utilized to save time in the grading/scoring process, to reduce typing, and/or to serve as a reminder of a particular specification or requirement.

Figure 13 is a flowchart illustrating one embodiment of the process 281 of acquiring polling information. First the user decides which poll name to use as illustrated in block 284. Then the polling data is obtained through the server, block 286. The user then answers the polling question, block 288, and the answer can then either be sent to the server or stored temporarily as illustrated in block 290. If there is more than one question, the user answers them and when all the questions are answered the polling data is sent to the server if it was stared temporarily as illustrated in blocks 292 and 294.

From the foregoing it will be observed that numerous modifications and variations can be effectuated without departing from the true spirit and scope of the novel concepts of the present invention. It is to be understood that no limitation with respect to the specific embodiments illustrated is intended or should be inferred. The disclosure is intended to cover by the appended claims all such modifications as fall within the scope of the claims.

## Claims

1. A method of providing an assessment of performance, said method comprising the steps of:
using a handheld device to collect and record data about the performance of one or more individuals or projects, said data including at least one of one or more rubrics, one or more check lists, more class information, student information, one or more tests, one or more libraries, demographic information, one or more scores, and one or more polls;
establishing a connection from said handheld device to a server through the internet;
uploading said data from said handheld device to said server, said data being stored in memory at said server and being accessible to others via internet connections to said server so that it is possible to provide substantially immediate feedback to others regarding the performance of said one or more individuals or projects

2. The method of claim 1, wherein said handheld device is connected to the internet via a personal computer, said personal computer being connected to the internet.

3. The method of claim 1, wherein said handheld device is connected to the internet via a wireless connection.

4. The method of claim 1, further comprising the step of using said server to merge said data provided by said handheld device with other data that is stored in memory at said server, said other data concerning the performance of one or more individuals or projects.

5. The method of claim 4, further comprising the step of averaging said merged data.

6. The method of claim 1, further comprising the steps of:
providing override preferences, said override preferences establishing guidelines for overriding data on said handheld or said server based upon a function performed by said handheld device; and
overriding the data based upon the override preferences provided.
